# EUROPEAN PATENT SPECIFICATION

(11) **EP 2 154 891 B1**
(45) Date of publication and mention of the grant of the patent: **20.03.2013**
(21) Application number: 08162188.0
(22) Date of filing: 11.08.2008
(51) Int. Cl.: H04N 7/26, H04H 60/65

(54) **Methods and systems for mapping subscription filters to advertisement applications**
Verfahren und Systeme zur Zuordnung von Abonnementsfiltern zu Werbeanwendungen
Procédés et systèmes de cartographie des filtres d'abonnement vers des applications publicitaires

(43) Date of publication of application: 17.02.2010
(73) Proprietor: Research In Motion Limited, Waterloo, ON N2L 3W8 (CA)
(72) Inventor: Shenfield, Michael, Richmond Hill Ontario L4C 3S9 (CA); Martin-Cocher, Gaelle, Toronto Ontario M6S 2Y2 (CA)
(74) Representative: Moore, Barry

(56) References cited:
- WO-A-2004/030338
- US-A1- 2002 087 401
- US-A1- 2007 005 795
- US-A1- 2007 100 651
- US-A1- 2007 202 922

## Description

The present disclosure relates generally to architectures for the delivery and display of advertising content and in particular to the delivery and display of advertising content on a mobile device.

Under the open mobile alliance (OMA) mobile advertising (MobAd) specification, an application on a mobile device will request advertisements from an advertising client. The application making the request is referred to as an "Ad App" and is any application resident on the device that makes an advertisement request to the advertising client. The Ad App may pass relevant information along with the advertisement request to facilitate advertisement selection. Such information can include the format of the advertisements such as text, audio, video, size limitations, among others. The request can also include information about the topic that the application is interested in, for example, sports, finance, among others. The ad request can also include information about the application type itself. For example, a widget or a short message service (SMS). In some cases, the advertisement request can include an advertisement identifier to identify a particular advertisement that the application is looking for.

WO 2004/030338, US 2007/100651 and US 2007/202922 disclose various aspects of mobile advertising that do not employ a data facade.

The advertising client is a modular application, resident on the device and in some embodiments capable of pre-fetching advertisements, requesting advertisements from an advertising platform, potentially collecting other user device information, tracking user interaction with advertisements and/or reporting advertisement metrics. The ad client, in some embodiments, also is able to perform advertisement selection to provide targeted advertisements to the advertising application. Such selection could use criteria such as advertisements relevant to the application type, application content, user preferences or other similar criteria.

A generic data façade is a module responsible for centralized data/content processing, distribution of data received from the server side to target applications and sending application data to the server side. One example is the open mobile alliance (OMA) dynamic content delivery (DCD) specification which provides for a DCD client that is responsible for receiving content using DCD channels to targeted DCD applications and may be responsible for managing the content on the applications behalf. The DCD specification is only one example of the generic façade and other generic façades would be applicable to the present disclosure. The data façade could be, in the DCD case, the DCD client for a mobile device and the DCD server for the network side.

### GENERAL

The present teaching provides a method as detailed in claim 1. Also provided is a mobile device in accordance with claim 14. Further provided is a computer readable medium according to claim 15. Advantageous features are provided in dependent claims.

The present disclosure may provide a method for data delivery of targeted mobile advertisement, the method may comprise: associating an advertising client with a data façade on a mobile device; passing a subscription filter for each advertising application on the mobile device from the advertising client to the data façade; receiving at the mobile device, a subscription identifier for each advertising application; mapping the subscription identifier to an advertising application; getting advertisements with subscription identifiers at the mobile device; communicating between an advertisement application and the advertising client to request an advertisement; and returning the advertisement to the advertising application.

The present disclosure may further provide a mobile device for separation of data delivery from mobile advertisement, the mobile device may comprise: a communications subsystem; a data façade communicating over said communications subsystem with a data delivery server; one or more advertising applications; an advertising client adapted to: associate with the data façade; pass a subscription filter for each of the one or more advertising applications to the data façade; get a subscription identifier for each of the one or more advertising applications; map the subscription identifier to one of the one or more advertising applications; receive a request for advertisements from the one or more advertising applications; and return advertisements to the one or more advertising applications; and storage for storing advertisements received by the data façade.

### BRIEF DESCRIPTION OF THE DRAWINGS

The present disclosure will be better understood with reference to the drawings, in which:
**Figure 1** is a block diagram of device side components required for using data façades subscription filters for advertisements purposes;
**Figure 2** is a data flow diagram showing the use of subscription filters with a data façade;
**Figure 3** is diagram showing advertising subsets returned to an advertising client and an advertising server;
**Figure 4** is a block diagram of device side components required for using data façade subscription filters for each advertising application;
**Figure 5** is a data flow diagram showing the using data façade subscription filters for each advertising application;
**Figure 6** is diagram showing advertising subsets returned to an advertising client and an advertising server; and
**Figure 7** is a block diagram of a mobile device that can be used with the methods and systems of the present disclosure.

### DESRIPTION OF PREFERRED EMBODIMENTS

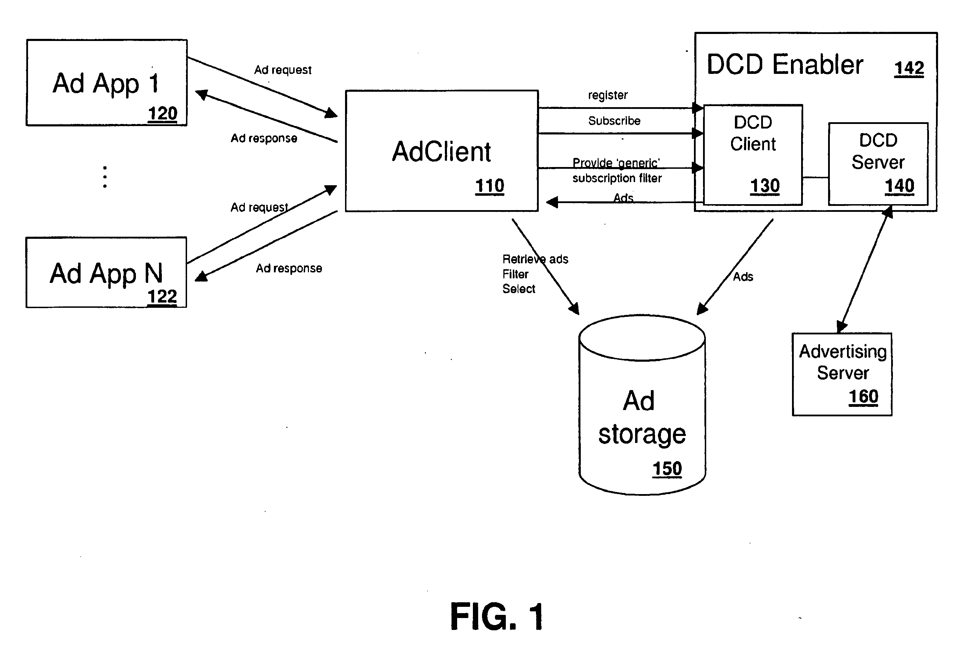

Reference is now made to the drawings. In **Figure 1** an advertising client **110** communicates with a plurality of ad applications, shown as ad application **120** and ad application N **122.** This is meant to represent a plurality of ad applications and the present disclosure is not limited by any particular number of ad applications communicating with advertising client **110.**

DCD client **130** is used in **Figure 1** for illustrative purposes for a generic data façade. In the OMA DCD specification, DCD client **130** is responsible for receiving content through DCD channels targeted to register through DCD applications and may be responsible for managing or caching this content on behalf of the application. The DCD enabled client application provides an application profile to the DCD client **130** and this application profile is used to configure delivery and storage preferences for the application and to match application content preferences to a subset of available channels that can be of interest to the DCD enabled client application.

In point-to-point delivery situation, the matching is typically performed on the server side by DCD server **140**, and together the DCD server **140** and DCD client **130** form a "DCD enabler" **142.**

In a broadcast scenario, a channel guide which lists available channels is delivered to the device and the matching is done on the client side by DCD client **130.** A DCD enabled client application can then choose channels of interest out of the subset by matching the application profile to the channel characteristics by subscribing to those channels.

Following the subscription of the DCD enabled client application, the application can provide subscription filters that allow content providers to personalize channel content for a user or a group of users. Subscription filters provide a mechanism, opaque to the data façade, to the content provider to ensure content targeting and personalization. The application profile may contain the field "content types" that lists generic tags or tokens for types of content of interest for the application. When content items, provided by the content provider, contain metadata describing the content type of the content item, the DCD server **140** and/or the DCD client **130** may dynamically match this content item with the DCD enabled client application that is subscribed to the channel and may be interested in the content item. The matching could be done, for example, using a pattern match between the content type attribute in the application profile provided by the DCD enabled client application and the content type attribute in the metadata of the content item.

In the present disclosure, the DCD enabled client application is advertising client **110,** thus removing the complexities of requiring subscriptions and providing subscription filters from ad applications **120** to **122,** instead placing them with advertising client **110.**

In an alternative embodiment, instead of a DCD enabler **142** as the generic data façade, XML web services (WS) such as Simple Object Access Protocol (SOAP) or representational state transfer (REST) device clients. A SOAP client that serves as a gateway to the device applications by interpreting application calls and messages into the outgoing SOAP messages and inbound SOAP messages into the application calls/messages could also be considered a data façade. Such SOAP clients can support a subscription model including subscription filters. Examples of such subscription models include WS-Eventing and WS-Notification.

For web services clients that facilitate device application access to server side data through the REST protocol, the REST client could also be considered as a data façade and the uniform resource locator (URL) attributes of REST/HTTP (hyper-text transfer protocol) requests are analogous to the parameters to the subscription filters.

Further, as used herein, "subscription filter" could be of any format or protocol. In one embodiment it could be as simple as a text string with preferences. In other embodiments the subscription filter could be an overloaded URL in HTTP request. The "subscription" is any interaction between a data client and a data server that involves providing preferences for subset of data to be delivered from the server. The subscription could be long lived (e.g. delivery channel or per duration of a session) or short lived (e.g. per single request as in REST case)

In **Figure 1** an advertising storage **150** may be used by DCD client **130** as a repository for advertisements, which could then be retrieved by advertising client **110.** In an alternative embodiment, DCD client **130** may pass the advertisement directly to advertising client **110.**

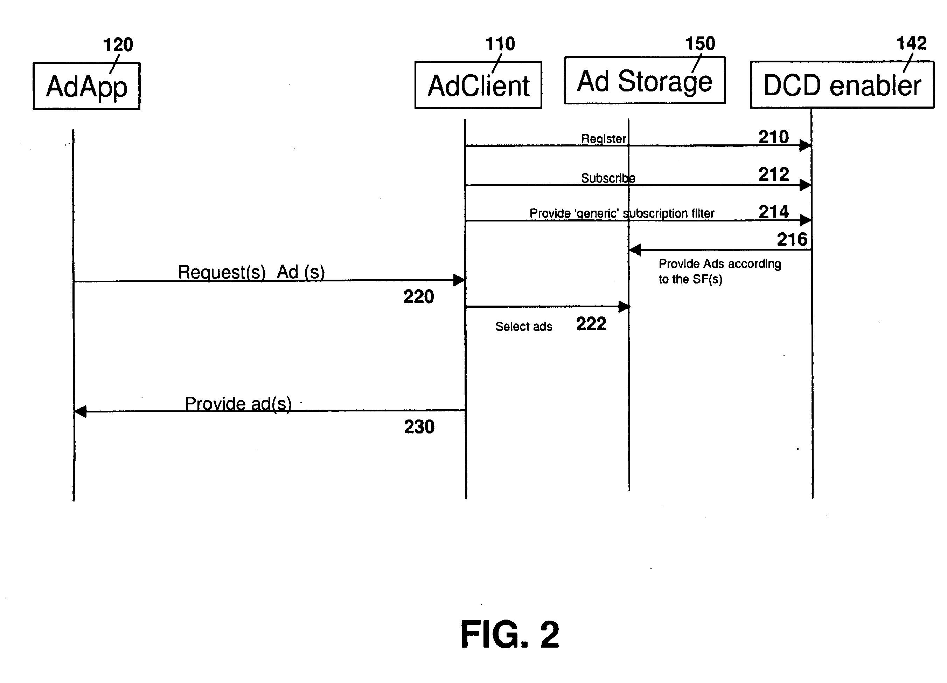

Reference is now made to **Figure 2****.** In **Figure 2** similar reference numerals are used as those in **Figure 1** to illustrate like elements. The embodiment of **Figure 2** is an example that shows data flow for push-based delivery of advertisements or notification of advertisement availability, including broadcast. A pull based model could also be used, as indicated below.

The data flow in Figure 2 starts with advertising client **110** registering, using message **210,** with DCD enabler **142.** In this way the advertising client **110** becomes the DCD enabled client application. In other embodiments the advertising client **110** may associate with a data façade instead of registering with it.

The advertising client **110** further subscribes, using message **212,** to a selection of advertising channels and submits subscription filters in message **214** in order to get content of interest from those advertising channels.

The 'generic' or 'consolidated' subscription filters provided in message **214** are opaque to the DCD enabler and are passed to the mobile advertising server platform **160** of **Figure 1****,** which can then perform advertising selection personalization according to the information contained in the subscription filters. The generic subscription filters provided in message **214** are broad enough for advertising client **110** to receive advertisements that correspond to various topics, categories or formats. This allows for the advertising client **110** to receive advertisements that are relevant for various ad applications **120** or **122**. In one embodiment the advertisements of interest may relate to advertising applications that may not even be installed at the time of the ad channel subscription and submission of the subscription filters.

The generic subscription filters of message **214** may include various parameters. Such parameters could, in one embodiment, include user interests. The user interests could be derived from content scanning and could include content type or categories. For example, if a user is interested in various sports and is subscribing to a feed for sports scores, this may be indicative of the user's interests and sports related advertisements can be provided to the mobile device. This could further be narrowed if the interests of the user relate only to auto racing, resulting in the sports advertisements being filtered to only advertisements related to auto racing. Other examples of interests could include different types of music, among others.

A second parameter that may be used is a user delivery preference. This parameter could include a preference for the frequency of delivery, the schedule for delivery, whether delivery should occur when roaming, among others. For example, the user may wish to have no delivery of advertisements while roaming in order to avoid roaming charges. Further, the user may not want to be interrupted during the workday by having advertisements being pushed to the device and thus may restrict that advertisements be only pushed to the device or pulled from the device at a certain time in the evening.

A third parameter could include a dynamic or pseudo-dynamic user context. Such context includes location information, presence information among others. Thus, the advertisements could relate to the user's location and the user's presence information. Presence information relates to whether the user is available, in a meeting, busy, among other possibilities.

A fourth parameter may include language preferences. A user may wish to receive advertisements only in French rather then in English.

A fifth parameter may include advertisement format preferences. Certain applications may require ads only in a JPEG format whereas others may require banner ads, splash ads, rich media ads, and interstitial ads, among others.

A further parameter may include device characteristics. Such characteristics include advertisements formatted according to a device screen size or a device screen capabilities, multimedia capabilities, available applications to render the advertisement, among others.

A further parameter could be the supported media types. Thus, video may not be supported on certain devices.

A further parameter could be supported content types. These content types could be generic tags or tokens for the types of content of interest for the application and be used to determine advertisement format preferences.

The above parameters could be used alone or in combination with other parameters. The list of parameters above is not exhaustive and other parameters are possible for the selection of advertising channel subscriptions and for the submission of subscription filters.

Once an advertisement and related content is provided by the advertising platform, the data façade delivers it directly to the corresponding advertising client **110** or stores it in an advertising storage **150.** This storage area **150** can be managed either by ad client **110** or the data façade such as DCD client **130.** It could also be a shared storage such as a device database.

While the advertisements provided in message **216** maybe provide a subset of interest that could be pre-fetched or stored on the device as a result of the push or automatic retrieval by the data façade, the ad client **110** may further narrow the search results according to parameters contained in the ad request. Such an ad request is received as message **220** and may contain parameters such as those above. Based on this, ad selection can occur as shown by message **222** from the ad storage **150** and the advertisement or advertisements are provided to the ad application **120** as message **230.**

The benefit of the above is a clear separation of advertisement and delivery realms. Advertising applications are not aware of the data façade and make ad requests using an interface to an advertising client **110.** The advertising client 110 is the one involved in the registration process when needed, including providing generic subscription filters, and can hide data access details from advertising applications **120.** The advertising client **110** consolidates advertising handling and advertising selection functions on the device.

The advertising client **110** can also dynamically update the generic subscription filters based on content or advertising consumption parameters. Thus, the subscription filter can be made to be more relevant depending on application usage of advertisements. For example, the use of certain applications more often to display advertisements, what topics of interests are being provided by the applications, ad request parameters from applications, or other parameters may be used to create the modified generic subscription filter.

The advertising client can also dynamically update the subscription filter in order to modify the advertisements delivery under particular dynamic conditions. This can be based on predefined criteria or when some thresholds are met. For example, if the device memory is below a certain threshold then the device may not want advertisements pushed to it and stored in advertising storage **150.** In this case, the generic subscription filter may, in a message **240,** be updated to restrict advertisements from being received.

Other examples of dynamic conditions could include device resource thresholds. For example, the battery level of the device are below a threshold and thus the data exchange in order to provide an advertisement may drain the battery, resulting in a bad user experience, the advertiser may not want this and thus restrict advertisement pushing or pulling.

A further dynamic condition that may cause an updated subscription filter is the presence status. For example, if a user goes into a meeting and his presence is shown as busy then the advertising may be restricted from being downloaded.

A further dynamic condition may cause an updated subscription filter is a location change. When a user is roaming this may cause additional charges the user may not wish to incur and advertising may be restricted when roaming.

The above is not exhaustive, and other dynamic conditions could exist that would allow the change of the generic subscription filters.

Based on **Figures 1** and **2** above, subscription filters are used to personalize advertising content received from the subscribed advertisement channels according to a user, device or advertising application preference. In these cases, the data façade supports content subscription and therefore advertising channels of interest. Further, the mobile advertising server can process subscription filters when providing the advertisements.

In a pull model, the data flow of **Figures 1** and **2** changes by having the DCD enabler **142** apply previously submitted subscription filters to return appropriate advertisements.

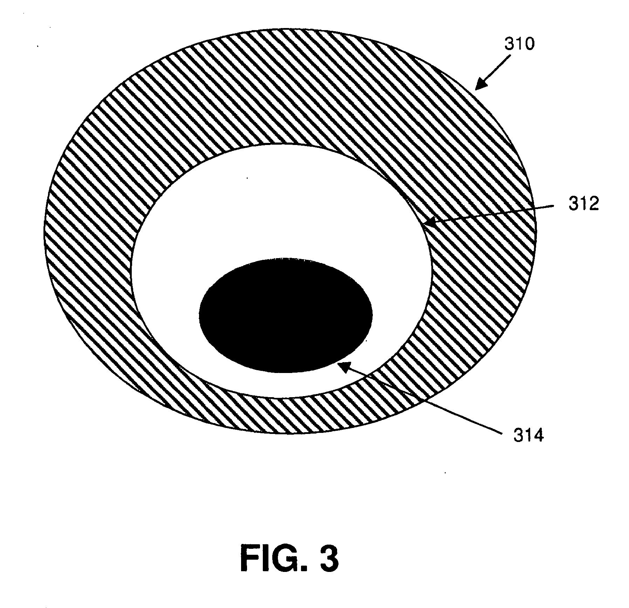

Reference is now made to **Figure 3****,** which shows a diagram of an advertising space. Outside circle **310** shows all advertisements available at the server side.

A subset of this is shown by circle **312**, which illustrates the advertisements corresponding to the subscription filter parameters that were provided by the advertising client **110.**

Circle **314** shows the subset of ads that match the parameters of the ad request from the ad application **120.** The ads within circle **314** are those which are returned to ad application **120** as the advertisement response. Alternatively, the ads in circle **314** could be provided to ad application **120** as a link or reference, at which time ad application **120** could retrieve the advertisement from storage **150.**

An example of the use of the above could be a mobile device which includes a plurality of applications. Such applications could include, for example, an investment portfolio manager, a music player, a web browser and an email application. Each of these applications is enabled to display advertisements.

The applications communicate with an advertising client on the mobile device to obtain advertisements for the particular application. For example, the music player application may require advertisements only in audio format to be inserted prior to playing a music selection. Conversely, the investment portfolio manager may have a space to place a banner ad in a JPEG format at the bottom of the screen. The web browser may allow short video clips to be played as advertisements.

Utilizing the architecture and dataflow of **Figures 1** and **2****,** the advertising client registers or associates with the data façade. In the case that the data façade is a DCD client, the advertising client becomes a DCD enabled application.
The advertising application can then subscribe using a generic subscription filter to various advertising channels for the DCD enabler.

In particular, the generic subscription filter could include a selection of advertising channels such as advertising directed towards financial services, music services and perhaps sports related advertisements. The generic subscription filter could also provide that the advertisements are required in one of several formats, including JPEG, audio or video.

Based on the generic subscription filter an advertising server returns advertisements matching the criteria in the filter.

When the user starts one of the applications an advertising request is provided to the advertising client. Thus, when the music player is started, it could request an advertisement. The advertising client could then either dynamically request the advertisement or look in a storage location for an advertisement that meets the criteria for the music player.

Dynamic filtering could also occur. For example, if several of the advertisements appropriate for the music player relate to stores selling music, the advertising client may select the advertisement based on the location of the mobile device and its proximity to the stores.

The advertising client returns the appropriate advertisement to the music player in the form of a advertisement response and at some point the music player consumes the advertisement by playing it to a user. The advertising client could also track the consumption of the advertisement and provide metrics back to an advertisement server for billing purposes.

### Individualized Subscriptions

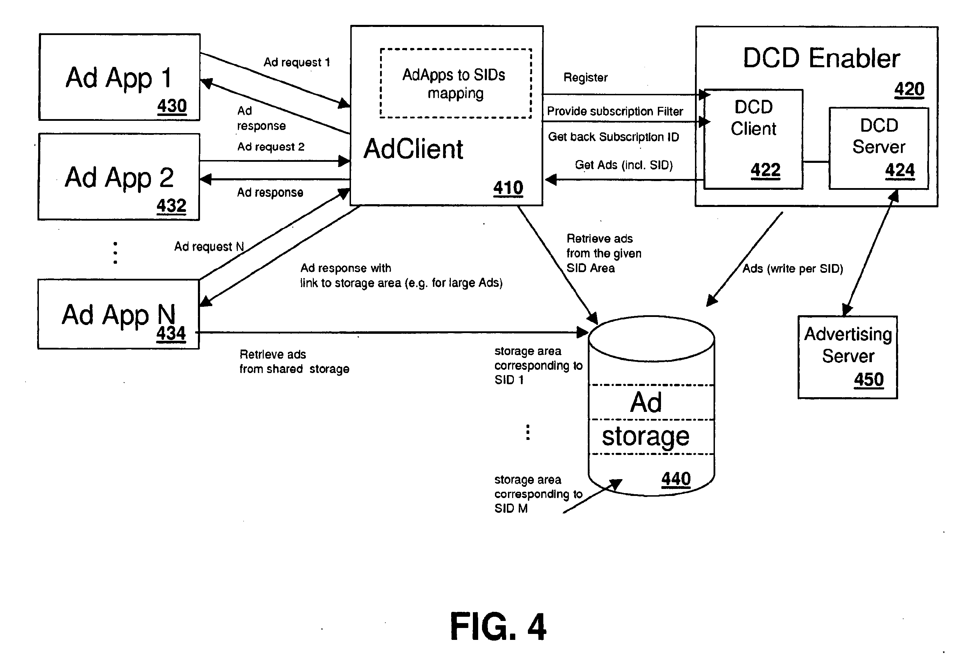

In an alternative embodiment, the advertising client could request a subscription filter for each advertising application. Reference is now made to **Figure 4****.** As with the embodiment of **Figure 1****,** in the embodiment of **Figure 4** ad applications are not aware of the data façade and send advertisement requests to advertising client **410.** The advertising client **410** works with the data façade to get advertisements. In the example of **Figure 4****,** the data façade is a a DCD client **422** or a DCD server **424.** DCD client **422** and DCD server **424** form DCD enabler **420**. Other data façades such as a SOAP or REST device client could equally be used.

A plurality of advertising applications, labeled as advertising applications **430, 432** and **434** may provide an advertising request to advertising client **410** and in response receive an advertising response back.

In the embodiment of **Figure 4****,** for each advertising application **430, 432, 434** the advertising client further defines a corresponding subscription filter and provides it to the data façade. Again, as used herein, "subscription filter" could be of any format or protocol. In one embodiment it could be as simple as a text string with preferences. In other embodiments the subscription filter could be an overloaded URL in HTTP request. The "subscription" is any interaction between a data client and a data server that involves providing preferences for subset of data to be delivered from the server. The subscription could be long lived (e.g. delivery channel or per duration of a session) or short lived (e.g. per single request as in REST case)

Thus, for example, if advertising application **430** is an investment portfolio installed on a mobile device, the advertising client **410** would submit a subscription filter expressing interest in advertisements related to stock quotes or alerts, financial news, financial tools or seminars, among others.

Conversely, if advertising application **432** is a music player application this may result in a subscription filter for advertisements of new cd's, local concerts, festivals, among others.

In one embodiment, subscription filters may also be dynamically customized based on the content consumed and/or ads requested by the application. As used herein, content consumption by an application means the use of data by the application. Thus, for an investment portfolio management application, content consumption could be the displaying of a stock ticker or a stock quote or for a music player it could be the audio output of a music file, for example. Dynamic customization could result in ads for a particular type of music, a music store close to the location of the user of the mobile device, or a financial planner that is close, etc.

Advertising client **410** maps an advertising application such as advertising application **430** to a subscription identifier corresponding with ad preferences from the subscription filter for the application **430.** The advertising client **410** maintains a two-way mapping of advertising applications to subscription identifiers.

When advertisements are matched to the subscription filter by an advertising server **450** and made available to the mobile device, they are provided to the advertising client **410** by the data façade and include the appropriate subscription identifier. The advertising client **410** then uses the mapping of the subscription identifier to the ad application **430** to identify the target application for this advertisement for a group of advertisements.

Next, advertising client **410** can further refine the selection for advertisements by additional filtering according to criteria such as application provided or user provided criteria or preconfigured criteria on mobile device.

Storage **440** is provided on the device and the DCD client **422** may write advertisements to the storage area **440** and the advertisements may be retrieved by advertising client **410.** In other embodiments the DCD client **422** may provide ads directly to advertising client **410.** In further alternative embodiments, an intelligent advertising application such as application **434** may retrieve ads from the shared storage directly, for example if provided a link by advertising client **410.** The direct retrieval of advertisements is facilitated by having an ad response with a link to the storage area or with a identifier for an advertisement in the storage area **440.** In other embodiments partitions could exist within storage area **440** for a subscription identifier and the advertising application matching the subscription identifier is notified of its partition.

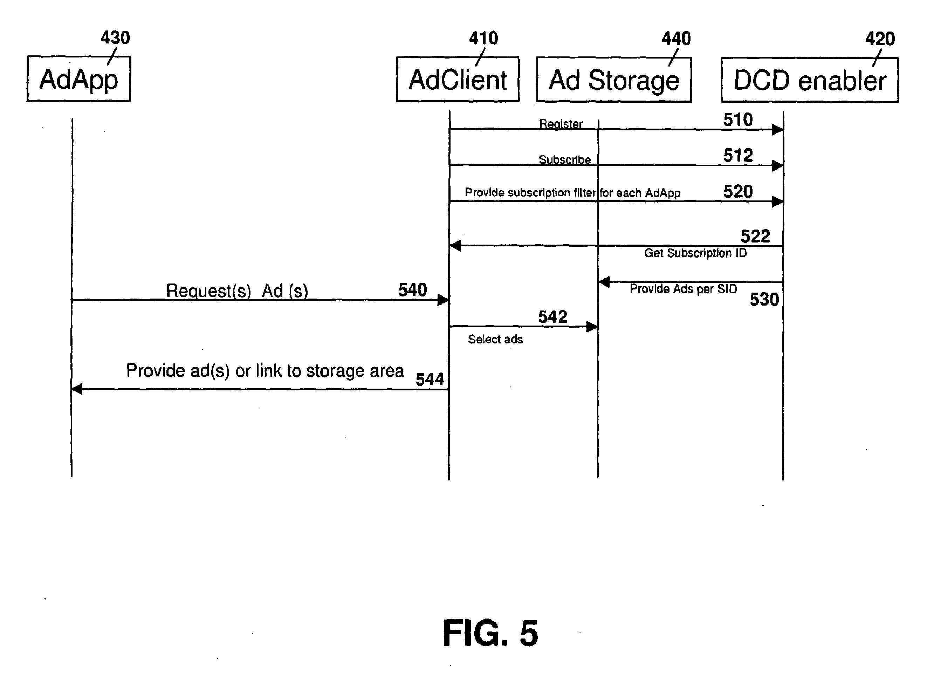

Reference is now made to **Figure 5. Figure 5** provides a data flow diagram for the infrastructure of **Figure 4****.** In particular, an advertising application **430** communicates with advertising client **410.** Further, storage **440** is accessible from the advertising client **410** or by the data façade such as DCD enabler **420.**

In message **510** the advertising client **410** registers or associates with the DCD enabler **420.** This process is similar to the registration of message **210** in **Figure 2****.**

The advertising client **410** then subscribes in message **512** with the DCD enabler **420.**

One or more advertising applications communicate with advertising client **410.** The present disclosure is not meant to be limited to a particular number of advertising applications.

In message **520** the advertising client **410** provides a subscription filter for each advertising application **430** registered or communicating with advertising client **410.** This could be done in a single message. Alternatively multiple messages **520** could be provided between advertising client **410** and DCD enabler **420** in order to provide a subscription filter for each advertising application. In one embodiment, a separate message **520** may be sent for each advertising application that is communicating with advertising client **410.**

DCD enabler **420** receives the subscription filter for each advertising application and provides a subscription identifier for each advertising application back to advertising client **410** in message **522.** Again, message **522** could be a single message with all subscription identifiers for advertising applications, or could be broken into multiple messages.

At some point based on a request from advertising client **410** or based on information from an advertising server (not shown), the DCD enabler **420** provides advertisements for a subscription identifier, which in the exemplary embodiment of **Figure 5** get written to storage **440** as shown by message **530.**

The advertising application **430** subsequently runs and requests an advertisement in message 540 from advertising client **410,** which selects advertisements from ad storage **440** as shown by message **542.**

The selection of ads by message **442** can include dynamic filtering of the advertisements that are within ad storage **440.** For example, dynamic rules such as what ads to provide are based on the device resources, the device roaming status, the device presence information, among others and may be utilized in order to filter through the advertisements that are provided for a particular subscription identifier.

In message **544** the advertisement is provided back to advertising application **430.** Alternatively, a link to the storage area may be provided through message **544.** The advertising application **430** can then go to storage **440** directly to retrieve the ad.

The model of **Figures 4** and **5** may be used for either pushing or pulling advertisements between the data façade and the advertising client **410**. The use of push and pull scenarios herein refers to pushing or pulling between the enabler **420** and advertising client **410** rather then between the DCD client **422** and the DCD server **424** of **Figure 4****.** Thus, for example, DCD client **422** can do a scheduled pull of advertisements from DCD server **424** but on the device it can push the ads to ad client **410.** In the present disclosure this is considered to be a push scenario. For a pull scenario, advertising application **430** makes an advertisement request to advertising client **410.** The advertising client **410** looks for the subscription identifier corresponding to the advertising application and inserts it into the advertisement requests for the data façade. Alternatively, such a request can be initiated by the advertising client **410** itself without a prior advertisement request from advertising application **430.** This could be as a result of a predefined schedule, for example.

The advertising server **460** from **Figure 4** makes an advertising selection according to the advertising subscription filter for the subscription identifier and returns the selected advertisements through a data façade such as DCD enabler **420.** The advertising client **410** then returns these advertisements to the appropriate advertising application or stores the advertisement in the shared memory or storage. The advertisements could be further filtered by advertising client **410.**

In a push scenario, the advertising client **410** gets the advertisements that are associated with the subscription identifier from the data façade. In this case, the delivery mechanism between the data façade and the delivery server is irrelevant and could be push, pull or broadcast.

The advertising client **410** matches the subscription identifier to the corresponding advertising application and advertising client **410** then either pushes the advertisement to the advertising application, notifies the advertising application of the advertisements, waits for the advertising application to request the advertisements or stores the advertisements in shared storage **440** which can then be accessed by the advertising application.

The advertising client **410** can determine the subscription filter parameters for a given advertising application by various means. The information may be provided by the advertising application itself or by some other actor acting on behalf of the advertising application. This may be done at the installation, configuration or registration times. Alternatively, the information for the subscription filter for a particular advertising application may be derived by screening the advertising application data.

Additionally, instead of a one to one matching between an advertising application and a subscription identifier, if multiple advertising applications have identical or similar characteristics that will lead to the creation of similar subscription filters, advertising client **410** may decide to map two or more advertising applications to a single subscription identifier. Thus, two or more advertising applications may share a subscription identifier while other advertising applications may have different subscription identifiers, and is referred to as a "M to N" mapping between advertising applications and subscription filters.

Storage for advertisements could be partitioned with respect to the subscription identifier. Thus, when a data façade receives advertisement for a particular subscription identifier it stores it in the area for the subscription identifier. The advertising client **410** can retrieve the advertisements for the subscription identifier and provide them to the appropriate application when needed. Alternatively, the advertising application can look in the storage based on the subscription identifier to select an appropriate advertisement. The address of the storage area for the subscription identifier corresponding to the advertising application could be provided by the advertising client **410** or could be preallocated or managed by the ad application or data façade.

Further, in the embodiment of **Figures 4** and **5****,** dynamic updates of the subscription filters and dynamic updates of parameters of subscription filters are also applicable. Thus, if the advertising application tends to be used for one purpose rather then another, the subscription filter for the advertising application or parameters within that subscription filter can be modified dynamically and a new message providing a modified subscription filter for that subscription identifier can be provided to the enabler **420** or any other data façade. Based on the above, the embodiments of **Figures 4** and **5** provide an advertising client **410** using application preferences to create subscription filters for advertisement selection at the advertising server **460**. The subscription identifier is created for each subscription filter and the advertising applications are associated with the subscription identifier. Advertising client **410** maintains a mapping of the advertising applications and the subscription identifiers.

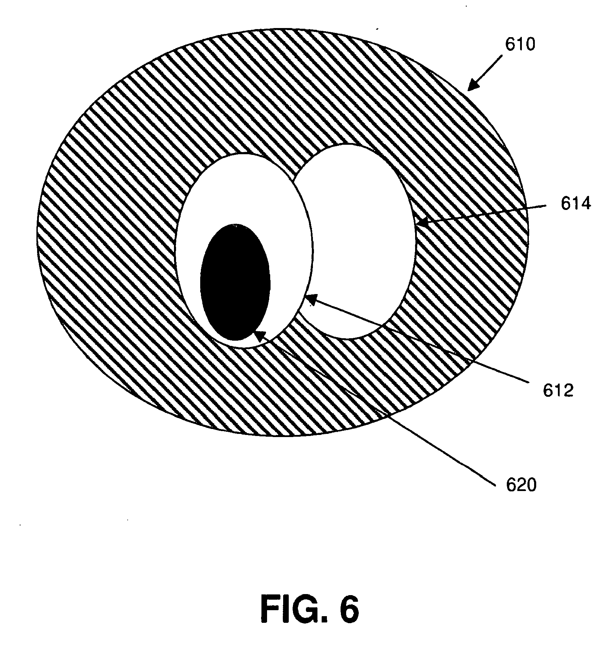

Reference is now made to **Figure 6**. **Figure 6** shows a diagram illustrating an advertising space.

In **Figure 6**, all ads that are available at the server side are displayed by circle **610.**

Various subsets of ads matching a particular subscription filter are shown. In the example of **Figure 6****,** the subsets of advertisements matching a particular subscription filter are shown as circle **612** for a first subscription filter and **614** for a second subscription filter.

As shown by circle **620** a subset of the advertisements for the first subscription filter of circle **612** are shown by circle **620**. This subset of ads match the parameters of the ad request from a ad application and are thus returned to the ad application either as the ad itself or as a link to a storage area on the mobile device.

An example of the above is the use of the mobile device having the music player, portfolio manager, browser and email application. Each of these applications is capable of consuming advertisements and makes advertisement requests to an advertising client.

The advertising client registers or associates with a data façade such as a DCD enabler. In the case of DCD enabler the advertising client becomes a DCD enabled application.

The advertising client subscribes to the DCD enabler and further provides subscription filters for each of the music player, portfolio manager, browser and email applications. Each subscription filter is customized for the particular application. Thus, the subscription filter for the music player could subscribe to advertising channels for music related advertisements. Parameters such as limiting advertisements to audio advertisements could also be provided in the subscription filter.

A subscription identifier is returned for each application. Thus, the music player would have a separate subscription identifier from the browser application.
A mapping could be done on the advertising client to map the subscription identifier with the particular application.

Thereafter, when an advertisement is provided to the mobile device the data façade could append the subscription identifier to the advertisement. The advertising client could then map the advertisement to a particular application and thus, store the advertisement in a particular memory location.

When, for example, the music application requests an advertisement, the advertising client could provide further dynamic filtering of advertisements and provide the advertisement to the music player application. Alternatively, the advertising client could provide a link to the advertisement or shared storage space. In a further embodiment the music player application could be provided with a partitioned storage area for the application in which it could find appropriate advertisements.

The advertising client could further manage this storage area by ensuring the advertisements in the storage area have not become outdated and by deleting those advertisements which have become outdated.

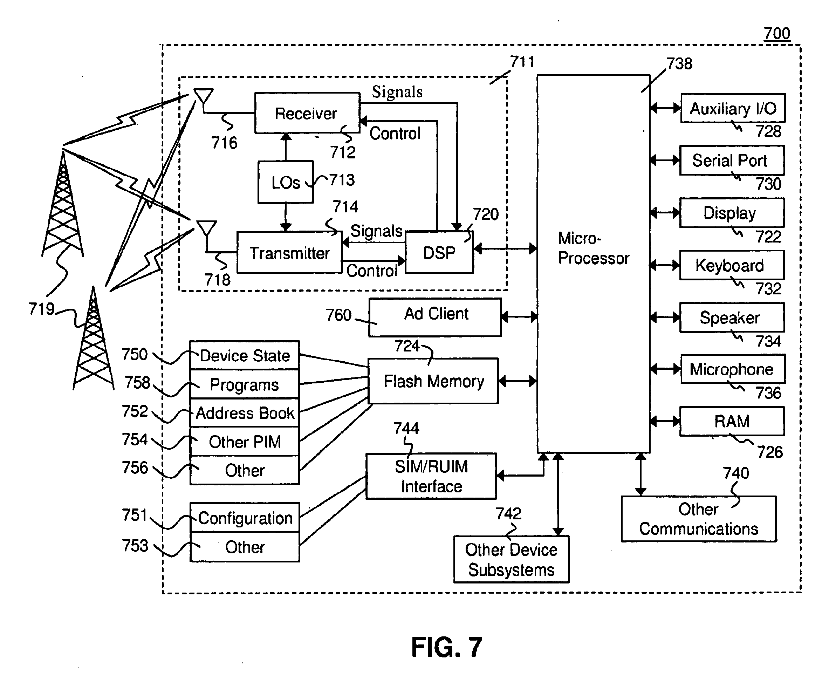

One exemplary mobile device is described below with reference to **Figure** 7. This is not meant to be limiting, but is provided for illustrative purposes.

**Figure 7** is a block diagram illustrating a mobile device apt to be used with preferred embodiments of the apparatus and method of the present application. Mobile device **700** is preferably a two-way wireless communication device having at least voice and data communication capabilities. Mobile device 700 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **700** is enabled for two-way communication, it will incorporate a communication subsystem 711, including both a receiver 712 and a transmitter **714,** as well as associated components such as one or more, preferably embedded or internal, antenna elements **716** and **718,** local oscillators (LOs) 713, and a processing module such as a digital signal processor (DSP) **720.** As will be apparent to those skilled in the field of communications, the particular design of the communication subsystem **711** will be dependent upon the communication network in which the device is intended to operate.

Network access requirements will also vary depending upon the type of network **719.** In some CDMA networks network access is associated with a subscriber or user of mobile device **700.** A CDMA mobile device may require a removable user identity module (RUIM) or a subscriber identity module (SIM) card in order to operate on a CDMA network. The SIM/RUIM interface **744** is normally similar to a card-slot into which a SIM/RUIM card can be inserted and ejected like a diskette or PCMCIA card. The SIM/RUIM card can have approximately 64K of memory and hold many key configuration **751**, and other information **753** such as identification, and subscriber related information.

When required network registration or activation procedures have been completed, mobile device **700** may send and receive communication signals over the network **719**. As illustrated in **Figure 7**, network **719** can consist of multiple base devices communicating with the mobile device. For example, in a hybrid CDMA 1x EVDO system, a CDMA base device and an EVDO base device communicate with the mobile device and the mobile device is connected to both simultaneously. The EVDO and CDMA 1x base stations use different paging slots to communicate with the mobile device.

Signals received by antenna **716** through communication network **719** are input to receiver **712**, which may perform such common receiver functions as signal amplification, frequency down conversion, filtering, channel selection and the like, and in the example system shown in **Figure 7****,** analog to digital (A/D) conversion. A/D conversion of a received signal allows more complex communication functions such as demodulation and decoding to be performed in the DSP **720**. In a similar manner, signals to be transmitted are processed, including modulation and encoding for example, by DSP **720** and input to transmitter **714** for digital to analog conversion, frequency up conversion, filtering, amplification and transmission over the communication network **719** via antenna **718**. DSP **720** not only processes communication signals, but also provides for receiver and transmitter control. For example, the gains applied to communication signals in receiver **712** and transmitter **714** may be adaptively controlled through automatic gain control algorithms implemented in DSP 720.

Mobile device **700** preferably includes a microprocessor **738** which controls the overall operation of the device. Communication functions, including at least data and voice communications, are performed through communication subsystem **711**. Microprocessor **738** also interacts with further device subsystems such as the display **722,** flash memory **724,** random access memory (RAM) **726**, auxiliary input/output (I/O) subsystems **728,** serial port **730**, one or more keyboards or keypads **732**, speaker **734,** microphone **736,** other communication subsystem **740** such as a short-range communications subsystem and any other device subsystems generally designated as **742.** Serial port **730** could include a USB port or other port known to those in the art.

Some of the subsystems shown in **Figure 7** perform communication-related functions, whereas other subsystems may provide "resident" or on-device functions. Notably, some subsystems, such as keyboard **732** and display **722**, for example, may be used for both communication-related functions, such as entering a text message for transmission over a communication network, and device-resident functions such as a calculator or task list.

Operating system software used by the microprocessor 738 is preferably stored in a persistent store such as flash memory 724, which may instead be a read-only memory (ROM) or similar storage element (not shown). Those skilled in the art will appreciate that the operating system, specific device applications, or parts thereof, may be temporarily loaded into a volatile memory such as RAM **726.** Received communication signals may also be stored in RAM **726.**

As shown, flash memory **724** can be segregated into different areas for both computer programs **758** and program data storage **750, 752, 754** and 756. These different storage types indicate that each program can allocate a portion of flash memory **724** for their own data storage requirements. Microprocessor **738,** in addition to its operating system functions, preferably enables execution of software applications on the mobile device. A predetermined set of applications that control basic operations, including at least data and voice communication applications for example, will normally be installed on mobile device **700** during manufacturing. Other applications could be installed subsequently or dynamically.

A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **719.** In a preferred embodiment, the PIM data items are seamlessly integrated, synchronized and updated, via the wireless network **719,** with the mobile device user's corresponding data items stored or associated with a host computer system. Further applications may also be loaded onto the mobile device **700** through the network **719**, an auxiliary I/O subsystem **728,** serial port **730**, short-range communications subsystem **740** or any other suitable subsystem **742,** and installed by a user in the RAM **726** or preferably a non-volatile store (not shown) for execution by the microprocessor 738. Such flexibility in application installation increases the functionality of the device and may provide enhanced on-device functions, communication-related functions, or both. For example, secure communication applications may enable electronic commerce functions and other such financial transactions to be performed using the mobile device **700.**

In a data communication mode, a received signal such as a text message or web page download will be processed by the communication subsystem **711** and input to the microprocessor **738**, which preferably further processes the received signal for output to the display **722,** or alternatively to an auxiliary I/O device **728.**

A user of mobile device **700** may also compose data items such as email messages for example, using the keyboard **732,** which is preferably a complete alphanumeric keyboard or telephone-type keypad, in conjunction with the display **722** and possibly an auxiliary I/O device **728**. Such composed items may then be transmitted over a communication network through the communication subsystem **711.**

An advertising client **760,** which could be equivalent to advertising client **110** or **410,** could be used to manage advertisements on the mobile device **700.**

For voice communications, overall operation of mobile device **700** is similar, except that received signals would preferably be output to a speaker **734** and signals for transmission would be generated by a microphone **736.** Alternative voice or audio I/O subsystems, such as a voice message recording subsystem, may also be implemented on mobile device **700.** Although voice or audio signal output is preferably accomplished primarily through the speaker **734,** display **722** may also be used to provide an indication of the identity of a calling party, the duration of a voice call, or other voice call related information for example.

Serial port **730** in **Figure 7**, would normally be implemented in a personal digital assistant (PDA)-type mobile device for which synchronization with a user's desktop computer (not shown) may be desirable, but is an optional device component. Such a port **730** would enable a user to set preferences through an external device or software application and would extend the capabilities of mobile device **700** by providing for information or software downloads to mobile device **700** other than through a wireless communication network. The alternate download path may for example be used to load an encryption key onto the device through a direct and thus reliable and trusted connection to thereby enable secure device communication. As will be appreciated by those skilled in the art, serial port **730** can further be used to connect the mobile device to a computer to act as a modem.

Other communications subsystems **740,** such as a short-range communications subsystem, is a further optional component which may provide for communication between mobile device **700** and different systems or devices, which need not necessarily be similar devices. For example, the subsystem **740** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for data delivery of targeted mobile advertisement, the method comprising:
associating an advertising client (110, 410, 760) with a data façade (142, 420) on a mobile device, wherein the data façade is a module responsible for distributing data received from servers to applications and for sending application data to servers, and wherein the advertising client is a modular application responsible for providing advertisements to advertising applications;
the advertising client subscribing (212, 512) to at least one advertising channel with the data façade;
passing (214, 520) a subscription filter for each advertising application (120, 122, 430, 432, 434) on the mobile device from the advertising client to the data façade;
receiving (522) at the mobile device, a subscription identifier for each advertising application;
mapping the subscription identifier to an advertising application;
getting (530, 542) data for advertisements with subscription identifiers at the mobile device;
communicating (220, 540) between an advertising application and the advertising client to request data for an advertisement; and
returning (230, 544) advertisement data to the advertising application, the advertisement data being associated with the subscription identifier which is mapped to the advertising application.

2. The method of claim 1 wherein the data façade is a dynamic content delivery client.

3. The method of claim 1 or claim 2, wherein the step of getting comprises pushing or pulling data for advertisements between the advertising client and the data façade.

4. The method of any one of claims 1 to 3, further comprising storing the advertisement data.

5. The method of claim 4, wherein the step of storing is based on the subscription identifier.

6. The method of claim 5, wherein a memory location is partitioned for a plurality of subscription identifiers.

7. The method of any one of claims 1 to 6, wherein the subscription filter contains one or more parameters selected from the group of: user interests; user delivery preferences; user context; language preferences; ad format preferences; device characteristics, content types, and media types.

8. The method of any one of claims 1 to 7, wherein the step of returning comprises returning a link to a memory location.

9. The method of any one of claims 1 to 8, wherein the subscription identifier is provided for a group of advertising applications.

10. The method of any one of claims 1 to 10, wherein the subscription filter is a text string with parameters or an overloaded uniform resource locator.

11. The method of any one of claims 1 to 10, further comprising filtering data for advertisements.

12. The method of claim 11, wherein the filtering is based on matching based on content type or on parameters in the advertisement request.

13. The method of claim 12, wherein the matching is mediated by the advertising client.

14. A mobile device comprising:
a communications subsystem;
a data façade communicating over said communications subsystem with a data delivery server;
one or more advertising applications;
an advertising client; and
storage for storing data for advertisements received by the data façade, the mobile device adapted to perform the steps of the method of any one of claims 1 to 13.

15. A computer readable medium comprising instructions that, when executed by a processor of a user equipment adapt the user equipment to perform f the steps of the method of any one of claims 1 to 13.

## Patentansprüche

1. Ein Verfahren zur Datenlieferung von gezielter mobiler Werbung, wobei das Verfahren aufweist:
Assoziieren eines Werbe-Clients (110, 410, 760) mit einer Daten-Fassade (142, 420) auf einer mobilen Vorrichtung, wobei die Daten-Fassade ein Modul ist, das für ein Verteilen von Daten, die von Servern empfangen werden, an Anwendungen und zum Senden von Anwendungsdaten an Server verantwortlich ist, und wobei der Werbe-Client eine modulare Anwendung ist, die verantwortlich ist zum Vorsehen von Werbeanzeigen an Werbeanwendungen;
wobei der Werbe-Client zumindest einen Werbekanal von der Daten-Fassade abonniert (212, 512);
Leiten (214, 520) eines Abonnement-Filters für jede Werbeanwendung (120, 122, 430, 432, 434) auf der mobilen Vorrichtung von dem Werbe-Client an die Daten-Fassade;
Empfangen (522) eines Abonnement-Identifizierers für jede Werbeanwendung an der mobilen Vorrichtung;
Zuordnen des Abonnement-Identifizierers zu einer Werbeanwendung; Erhalten (530, 542) von Daten für Werbeanzeigen mit Abonnement-Identifizierern an der mobilen Vorrichtung;
Kommunizieren (220, 540) zwischen einer Werbeanwendung und dem Werbe-Client, um Daten für eine Werbeanzeige anzufordern; und
Übergeben (230, 544) von Werbedaten an die Werbeanwendung, wobei die Werbedaten mit dem Abonnement-Identifizierer assoziiert sind, der der Werbeanwendung zugeordnet ist.

2. Das Verfahren gemäß Anspruch 1, wobei die Daten-Fassade ein "dynamische Inhaltlieferung"-Client ist.

3. Das Verfahren gemäß Anspruch 1 oder Anspruch 2, wobei der Schritt des Erhaltens aufweist ein Verschieben oder Holen von Daten für Werbeanzeigen zwischen dem Werbe-Client und der Daten-Fassade.

4. Das Verfahren gemäß einem der Ansprüche 1 bis 3, das weiter ein Speichern der Werbedaten aufweist.

5. Das Verfahren gemäß Anspruch 4, wobei der Schritt des Speicherns auf dem Abonnement-Identifizierer basiert.

6. Das Verfahren gemäß Anspruch 5, wobei ein Speicherort für eine Vielzahl von Abonnement-Identifizierern partitioniert ist.

7. Das Verfahren gemäß einem der Ansprüche 1 bis 6, wobei der Abonnement-Filter einen oder mehrere Parameter enthält, der/die aus der Gruppe ausgewählt ist/sind: Benutzerinteressen; Benutzer-Lieferpräferenzen; Benutzerkontext; Sprachpräferenzen; Werbeformat-Präferenzen; Vorrichtungscharakteristiken, Inhalttypen und Medientypen.

8. Das Verfahren gemäß einem der Ansprüche 1 bis 7, wobei der Schritt des Übergebens ein Übergeben eines Verweises zu einem Speicherort aufweist.

9. Das Verfahren gemäß einem der Ansprüche 1 bis 8, wobei der Abonnement-Identifizierer für eine Gruppe von Werbeanwendungen vorgesehen ist.

10. Das Verfahren gemäß einem der Ansprüche 1 bis 10, wobei der Abonnement-Filter eine Textzeichenfolge mit Parametern oder ein überladener URL (Uniform Resource Locator) ist.

11. Das Verfahren gemäß einem der Ansprüche 1 bis 10, das weiter ein Filtern von Daten für Werbeanzeigen aufweist.

12. Das Verfahren gemäß Anspruch 11, wobei das Filtern auf einer Zuordnung basierend auf Inhaltstyp oder auf Parametern in der Werbeanforderung basiert.

13. Das Verfahren gemäß Anspruch 12, wobei die Zuordnung durch den Werbe-Client vermittelt wird.

14. Eine mobile Vorrichtung, die aufweist:
ein Kommunikationsteilsystem;
eine Daten-Fassade, die über das Kommunikationsteilsystem mit einem Datenliefer-Server kommuniziert;
eine oder mehrere Werbeanwendung(en);
einen Werbe-Client; und
einen Speicher zum Speichern von Daten für Werbeanzeigen, die von der Daten-Fassade empfangen werden, wobei die mobile Vorrichtung ausgebildet ist, die Schritte des Verfahrens gemäß einem der Ansprüche 1 bis 13 durchzuführen.

15. Ein computerlesbares Medium, das Anweisungen aufweist, die bei Ausführung durch einen Prozessor einer Benutzerausrüstung die Benutzerausrüstung ausbilden, die Schritte des Verfahrens gemäß einem der Ansprüche 1 bis 13 durchzuführen.

## Revendications

1. Procédé pour la délivrance de données de publicité mobile ciblée, le procédé comprenant :
l'association d'un client de publicité (110, 410, 760) à une façade de données (142, 420) sur un dispositif mobile, la façade de données étant un module responsable de la distribution de données reçues à partir de serveurs à des applications et de l'envoi de données d'application à des serveurs, et le client de publicité étant une application modulaire responsable de la délivrance de publicités à des applications de publicité ;
l'abonnement du client de publicité (212, 512) à au moins un canal de publicité avec la façade de données ;
le passage (214, 520) par un filtre d'abonnement pour chaque application de publicité (120, 122, 430, 432, 434) sur le dispositif mobile du client de publicité à la façade de données ;
la réception (522) dans le dispositif mobile d'un identifiant d'abonnement pour chaque application de publicité ;
la projection de l'identifiant d'abonnement vers une application de publicité ;
l'obtention (530, 542) de données pour des publicités avec des identifiants d'abonnement dans le dispositif mobile ;
la communication (220, 540) entre une application de publicité et le client de publicité pour demander des données pour une publicité ; et
le renvoi (230, 544) de données de publicité à l'application de publicité, les données de publicité étant associées à l'identifiant d'abonnement qui est projeté vers l'application de publicité.

2. Procédé selon la revendication 1, dans lequel la façade de données est un client de délivrance de contenu dynamique.

3. Procédé selon la revendication 1 ou la revendication 2, dans lequel l'étape d'obtention comprend le fait de pousser ou de tirer des données pour des publicités entre le client de publicité et la façade de données.

4. Procédé selon l'une quelconque des revendications 1 à 3, comprenant de plus la mémorisation des données de publicité.

5. Procédé selon la revendication 4, dans lequel l'étape de mémorisation est basée sur l'identifiant d'abonnement.

6. Procédé selon la revendication 5, dans lequel un emplacement de mémoire est divisé pour une pluralité d'identifiants d'abonnement.

7. Procédé selon l'une quelconque des revendications 1 à 6, dans lequel le filtre d'abonnement contient un ou plusieurs paramètres sélectionnés parmi le groupe comprenant : des intérêts d'utilisateur ; des préférences de délivrance d'utilisateur ; un contexte d'utilisateur ; des préférences linguistiques ; des préférences de format ; des caractéristiques de dispositif, des types de contenu et des types de média.

8. Procédé selon l'une quelconque des revendications 1 à 7, dans lequel l'étape de renvoi comprend le renvoi d'un lien à un emplacement de mémoire.

9. Procédé selon l'une quelconque des revendications 1 à 8, dans lequel l'identifiant d'abonnement est délivré pour un groupe d'applications de publicité.

10. Procédé selon l'une quelconque des revendications 1 à 10, dans lequel le filtre d'abonnement est une chaîne de texte avec des paramètres ou un localisateur de ressources uniformes surchargées.

11. Procédé selon l'une quelconque des revendications 1 à 10, comprenant de plus le filtrage de données pour des publicités.

12. Procédé selon la revendication 11, dans lequel le filtrage est basé sur une correspondance basée sur un type de contenu ou sur des paramètres dans la demande de publicité.

13. Procédé selon la revendication 12, dans lequel la correspondance est mise en oeuvre par le client de publicité.

14. Dispositif mobile, comprenant :
un sous-système de communications ;
une façade de données communiquant sur ledit sous-système de communications avec un serveur de délivrance de données ;
une ou plusieurs applications de publicité ;
un client de publicité ; et
une mémoire pour mémoriser des données pour des publicités reçues par la façade de données, le dispositif mobile étant adapté de façon à exécuter les étapes du procédé selon l'une quelconque des revendications 1 à 13.

15. Support lisible par un ordinateur, comprenant des instructions qui, lorsqu'elles sont exécutées par un processeur d'un équipement d'utilisateur, adaptent l'équipement d'utilisateur de façon à exécuter les étapes du procédé selon l'une quelconque des revendications 1 à 13.
